# EUROPÄISCHE PATENTSCHRIFT

(11) **EP 1 473 110 B1**
(45) Veröffentlichungstag und Bekanntmachung des Hinweises auf die Patenterteilung: **04.03.2009**
(21) Anmeldenummer: 04101117.2
(22) Anmeldetag: 18.03.2004
(51) Int. Cl.: B23Q 1/28, B25B 5/16, F15B 15/26

(54) **Spannelement zum Spannen von Werkstücken auf Maschinentischen, Vorrichtungen oder Paletten**
Device for clamping workpieces on machinetables, devices or pallets
Dispositif de serrage de pièces sur des tables de machine-outil, sur des dispositifs ou sur des palettes

(30) Priorität: 30.04.2003 DE 10319815
(43) Veröffentlichungstag der Anmeldung: 03.11.2004
(73) Patentinhaber: Ludwig Ehrhardt GmbH, 35321 Laubach (DE)
(72) Erfinder: Fischer, David, 63743 Aschaffenburg (DE)
(74) Vertreter: von Ahsen, Erwin-Detlef

(56) Entgegenhaltungen:
- EP-A- 0 620 084
- DE-A- 3 816 691
- DE-A- 10 038 760
- DE-B- 1 170 336
- GB-A- 2 185 532

## Beschreibung

Die Erfindung betrifft ein Spannelement zum Spannen von Werkstücken auf Maschinentischen, Vorrichtungen oder Paletten, mit einem Gehäuse und einem Spannkolben, der in einer Zylinderbohrung des Gehäuses geführt ist, einer ersten Druckkammer und einer zweiten Druckkammer, welche zum Betätigen des Spannkolbens mit Druckmittel beaufschlagbar sind, sowie einer Sicherungseinrichtung, insbesondere einem Sicherungskolben, durch die der Spannkolben in seiner das Werkstück spannenden Stellung sicherbar ist.

Ein solches Spannelement ist aus der Praxis bekannt und wird beispielsweise von HEB-Hydraulik-Elementebau GmbH, Freiburg, Bauart KH oder KFH, vertrieben. Es handelt sich dabei um einen Linearzylinder, bei dem der Spannkolben in der Zylinderbohrung des Gehäuses längsverschieblich geführt ist. Am Spannkolben ist ein Druckstück vorgesehen, mit dem das Werkstück gespannt wird. Zum Spannen des Werkstücks wird der Spannkolben mit einem Druckmittel, konkret Hydrauliköl, beaufschlagt und so aus dem Gehäuse in seine Spannstellung ausgefahren. Je nach Bauart des Linearzylinders wird der Spannkolben zum Entspannen entweder in Gegenrichtung mit Druckmittel beaufschlagt oder mittels Federkraft zurückgedrückt.

Es kommt vor, daß das Spannelement von der Hydraulikversorgung abgekoppelt werden muß, während ein Werkstück mit dem Spannelement gespannt ist. Dieses ist beispielsweise dann der Fall, wenn ein Werkstück mittels eines oder mehrerer Spannelemente auf einer Wechselpalette gespannt und auf dieser Wechselpalette zur Durchführung unterschiedlicher Bearbeitungsschritte auf mehreren Werkzeugmaschinen oder Bearbeitungszentren gespannt wird. Zumindest während des Transports von einer Werkzeugmaschine oder einem Bearbeitungszentrum zur nächsten Werkzeugmaschine oder Bearbeitungszentrum muß das Spannelement von der Hydraulikversorgung abgekoppelt werden. Das Spannelement KH bzw. KFH der HEB-Hydraulik-Elementebau GmbH verfügt deshalb über einen Sicherungskolben, konkret einen Klemmkolben, durch den der Spannkolben in seiner Spannstellung gesichert, nämlich festgeklemmt wird.

Aus der DE 100 38 760 A1 ist ein Stützelement bekannt, bei dem der in Ausfahrrichtung federvorgespannte Stützkolben durch einen Klemmkolben gesichert ist.

Weiter ist aus der DE 38 16 691 A1 ein federndes Druckelement für einen Kniehebelspanner bekannt. Hierbei besteht das Druckelement im Wesentlichen aus einem festen Bolzen, auf den Federn und eine Lochscheibe gefädelt sind.

Insbesondere bei weichem Druckstück oder Werkstück oder bei hohen Bearbeitungskräften, wie sie beispielsweise beim Schruppen auftreten, kann es zu . Setzerscheinungen kommen, durch welche sich das Werkstück lösen kann. Ebenso kann es auch durch Wegfließen einer Lack- oder Kunststoffschicht auf dem Werkstück oder durch Eindringen von Zähnen am Druckstück in das Werkstück zu Setzerscheinungen kommen. Da der Spannkolben aber in seiner Spannstellung durch den Sicherungskolben arretiert ist, ist ein Nachgreifen nicht möglich. Es besteht die Gefahr, daß sich das Werkstück vollständig löst, was zu Beschädigungen an dem Werkstück oder dem Werkzeug bis hin zur Gefährdung des Personals führen kann.

Hiervon ausgehend liegt der Erfindung das Problem zugrunde, ein Spannelement der eingangs genannten Art derart weiterzubilden, daß ein Nachgreifen möglich ist.

Zur Lösung dieses Problems ist das erfindungsgemäße Spannelement **dadurch gekennzeichnet, daß** der Spannkolben einen Arbeitskolben und einen in Spannstellung des Spannkolbens auf das Werkstück wirkenden Druckkolben aufweist, wobei der Druckkolben gegenüber dem Arbeitskolben beweglich geführt und in Spannrichtung des Druckkolbens gegenüber dem Arbeitskolben vorgespannt ist, und wobei die erste Druckkammer dem Arbeitskolben und die zweite Druckkammer dem Druckkolben zugeordnet ist.

Mit einem derart ausgebildeten Spannkolben ist es möglich, den Arbeitskolben mittels des Sicherungskolbens zu arretieren, insbesondere zu klemmen. Eventuell auftretende Setzerscheinungen werden durch den gegenüber dem Arbeitskolben vorgespannten Druckkolben ausgeglichen. Ein Nachgreifen ist damit möglich.

Nach einer konstruktiven Ausgestaltung der Erfindung ist der Druckkolben mittels einer Druckfeder gegenüber dem Arbeitskolben vorgespannt. Als Druckfeder kann wenigstens eine Tellerfeder, vorzugsweise ein Tellerfederpaket verwendet werden. Tellerfedern haben den Vorteil, bei geringem Weg eine große Federkraft aufzubauen. Darüber hinaus läßt sich durch die Zahl und Art der Tellerfedern in einem Tellerfederpaket die erforderliche Federcharakteristik besonders einfach auf den jeweiligen Anwendungsfall abstimmen, so daß durch Austauschen bzw. Umkonfigurieren des Tellerfederpakets das selbe Spannelement für unterschiedlichste Spannaufgaben eingestellt werden kann.

Die Zylinderbohrung, in der der Spannkolben geführt ist, ist vorzugsweise als Sackbohrung ausgebildet und mittels einer Dicht- und Führungsmutter, in die der Spannkolben ebenfalls geführt ist, verschlossen. Der Gewindekerndurchmesser der Dicht- und Führungsmutter sollte dabei größer sein als der Durchmesser der Zylinderbohrung und damit der größte Außendurchmesser des Spannkolbens. Auf diese Weise läßt sich der Spannkolben auf einfache Weise durch Lösen der Dicht- und Führungsmutter ausbauen, um beispielsweise das Tellerfederpaket umzukonfigurieren.

Die einfache Montage des Spannkolbens wird weiter dadurch erleichtert, daß der Spannkolben bzw. der Arbeitskolben durch einen gesonderten Betätigungskolben beaufschlagt wird. Nach einer konkreten konstruktiven Ausgestaltung wird dabei zunächst der Betätigungskolben mit Druckmittel beaufschlagt, der sodann den Spannkolben bzw. den Arbeitskolben in die Spannstellung drückt. Wäre der Betätigungskolben fest mit dem Spannkolben bzw. dem Arbeitskolben verbunden, ließe sich bei einer Gestaltung des Klemmkolbens analog des aus dem Stützelement nach der DE 100 38 760 A1 bekannten Klemmkolbens der fertig montierte Spannkolben nicht einseitig aus dem Sackloch herausziehen, da der Betätigungskolben mit dem Klemmkolben kollidieren würde. In diesem Falle müßte der Spannkolben zerlegt durch eine Durchgangsbohrung im Gehäuse montiert werden, nämlich der Druckkolben von der einen und der Arbeitskolben von der anderen Seite. Bei einem gesonderten Betätigungskolben kann hingegen der Betätigungskolben im Gehäuse verbleiben und der Spannkolben, selbst bei korrespondierend zum Klemmkolben keilförmig abgeflachter Unterseite analog DE 100 38 760 A1, insgesamt entnommen und zum Anpassen der Nachgreifeigenschaften das Tellerfederpaket ausgetauscht bzw. umkonfiguriert werden.

Der Druckkolben und der Arbeitskolben sind nach einer weiteren konstruktiven Ausgestaltung der Erfindung mittels einer Schraube miteinander verbunden. Da beim Spannen eines Werkstücks der Druckkolben und der Arbeitskolben zusammengedrückt werden, kommt bei dieser Variante allerdings in Spannstellung des Spannkolbens der Kopf der Schraube frei. Die Schraube wäre nun nicht mehr gekontert und kann sich durch während der Bearbeitung des Werkstücks entstehende Vibrationen lösen. Um dieses zu verhindern ist die Schraube mittels einer Sicherungsschraube oder einem Gewindestift gekontert. Diese Sicherungsschraube bzw. dieser Gewindestift wird von der dem Schraubenkopf entgegengesetzten Seite eingeschraubt und so die Schraube und die Sicherungsschraube bzw. der Gewindestift miteinander verkontert.

Obwohl es durchaus möglich und auch aus der Literatur bekannt ist, die einzelnen Kolben des Spannelementes elektromagnetisch zu betätigen, so sind in der Praxis Spannelemente zum Spannen von Werkstücken nahezu ausschließlich druckmittelbetätigt, wobei in den überwiegenden Fällen eine hydraulische Betätigung einer pneumatischen Betätigung vorgezogen wird. Dabei weist ein Spannelement mit Klemmkolben vier Druckkammern auf, nämlich zwei Druckkammern zum Spannen und Entspannen am Spannkolben sowie zwei Druckkammern zum Klemmen und Freigeben am Sicherungskolben. Nach einer Weiterbildung der Erfindung ist es nun vorgesehen, daß zum Entspannen des Werkstücks der Arbeitskolben und der Spannkolben gemeinsam betätigt, also mit dem Druckmittel beaufschlagt werden. Somit ist zum Entspannen des Spannkolbens und für den Sicherungskolben nur ein gemeinsamer Druckmittelanschluß erforderlich. Die beiden zugehörigen Druckräume werden durch eine interne Verbindungsbohrung miteinander verbunden. Dabei kann zwar ein Ventil, durch welches der Spannkolben zeitversetzt zum Sicherungskolben beaufschlagt wird, vorgesehen sein. Dieses ist aber nicht erforderlich. Beide Druckräume können gleichzeitig mit dem Druckmittel beaufschlagt werden. Der Spannkolben wird sich erst aus der Spannstellung lösen, nachdem der Sicherungskolben die Klemmung des Spannkolbens aufgehoben hat.

Ebenso ist es auch möglich, den Spannkolben, also konkret den Arbeitskolben, und den Sicherungskolben zum Spannen des Werkstücks gemeinsam zu betätigen. Damit der Spannkolben hier aber zuverlässig seine Spannstellung erreicht, ist vorgesehen, daß der Sicherungskolben erst dann betätigt, also mit dem Druckmittel beaufschlagt wird, wenn der Spannkolben seine Spannstellung erreicht hat. Dieses kann durch geeignete Ventile in der Verbindungsbohrung der beiden zugehörigen Druckkammern sichergestellt werden. Zum einen kommt ein Ventil in Betracht, das das Druckmittel erst in den Druckraum zum Klemmen des Sicherungskolbens gelangen läßt, wenn ein gewisser Schwellwert des Hydraulikdrucks in der Druckkammer zum Spannen des Spannkolbens erreicht ist. Daneben kommt auch eine elektronische Steuerung des Ventils in Betracht, beispielsweise über einen nach einer anderen Weiterbildung der Erfindung vorgesehenen Sensor, der das Erreichen der Spannstellung des Spannkolbens meldet.

Durch das vorbeschriebene gemeinsame Betätigen des Arbeitskolbens und des Sicherungskolbens zum Spannen und/oder Entspannen des Werkstücks läßt sich also die Zahl der Hydraulikanschlüsse auf drei oder gar zwei Hydraulikanschlüsse reduzieren. Diese Weiterbildungen sind aber nicht nur auf druckmittelbetätigte Spannelemente beschränkt. Diese Weiterbildungen lassen sich analog auch für elektromagnetisch oder anderweitig betätigte Spannelemente vorteilhaft anwenden.

Der Arbeitskolben ist auf seiner dem Klemmkolben gegenüberliegenden Seite mit Abflachungen versehen, durch welche sich ein Freiraum zwischen der Zylinderwandung der Zylinderbohrung für den Spannkolben und dem Arbeitskolben selbst ergibt. Hierdurch ergibt sich eine Verstärkung der Klemmkraft im Arbeitskolben aufgrund des Klemmkolbens. Dabei wird im Prinzip der gleiche physikalische Effekt, wie er in der DE 100 38 760 A1 anhand der Fig. 4 erläutert ist, genutzt.

Die Erfindung wird nachfolgend anhand von in den Zeichnungen dargestellten Ausführungsbeispielen näher erläutert. In den Zeichnungen zeigen:
- Fig. 1: ein erstes Ausführungsbeispiels eines Spannelementes mit den Erfindungsmerkmalen im Vertikal-Längsschnitt in gelöster Stellung,
- Fig. 2: das Spannelement gemäß Fig. 1 in Draufsicht,
- Fig. 3: das Spannelement gemäß Fig. 1 im Vertikal-Querschnitt,
- Fig. 4: einen Spannkolben für das Spannelement gemäß Fig. 1,
- Fig. 5: das Spannelement gemäß Fig. 1 im Vertikal-Längsschnitt beim Spannen eines Werkstücks (in gespannter Stellung),
- Fig. 6: ein zweites Ausführungsbeispiel eines Spannelementes mit den Erfindungsmerkmalen im Vertikal-Längsschnitt in gespannter Stellung,
- Fig. 7: das Spannelement gemäß Fig. 6 im Vertikal-Querschnitt in gespannter Stellung,
- Fig. 8: ein weiteres Ausführungsbeispiel eines Spannelementes mit den Erfindungsmerkmalen in Draufsicht

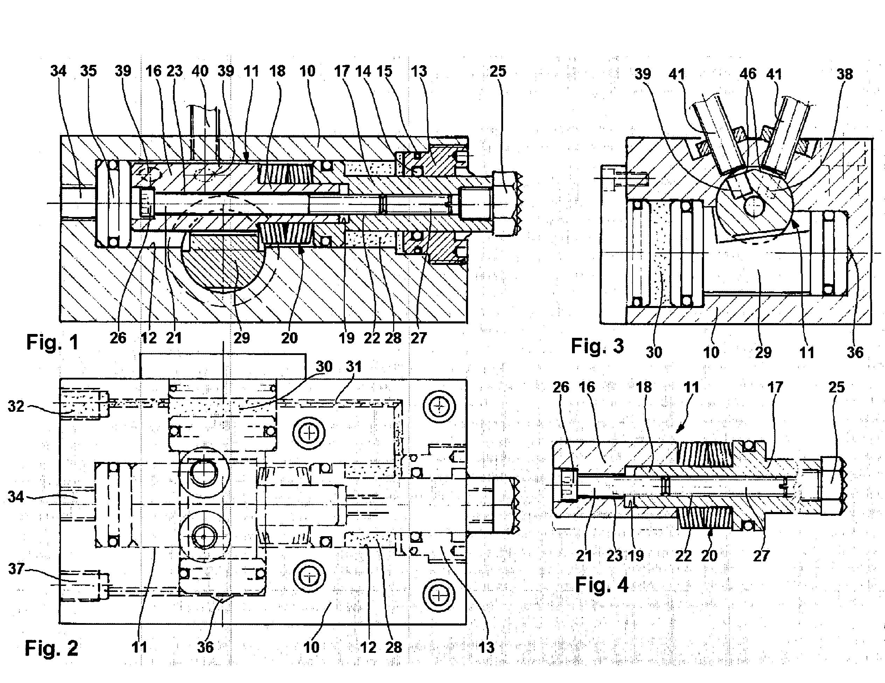

Das erfindungsgemäße Spannelement weist ein Gehäuse 10 und einen Spannkolben 11 auf. Der Spannkolben ist dabei in einer Zylinderbohrung 12 längsverschieblich geführt. Die Zylinderbohrung 12 ist als Sackbohrung ausgebildet und durch eine Dicht- und Führungsmutter 13 verschlossen. In dieser Dicht- und Führungsmutter 13 ist der Spannkolben 11 ebenfalls geführt, wobei eine Dichtung 14 für eine druckmitteldichte Abdichtung sorgt. Eine weitere Dichtung 15 sorgt für eine durchmitteldichte Abdichtung der Dicht- und Führungsmutter 13 gegenüber dem Gehäuse 10. Wie in den Fig. 1, 2 und 5 ebenfalls gut zu erkennen ist, ist der Gewindekerndurchmesser der Dicht- und Führungsmuter 13 größer als der Durchmesser der Zylinderbohrung 11 und damit größer als der größte Durchmesser des Spannkolbens 11. Der Spannkolben 11 läßt sich so durch Lösen der Dicht- und Führungsmutter 13 problemlos aus- und wieder einbauen.

Der Spannkolben 11 weist einen Arbeitskolben 16 und einen Druckkolben 17 auf. Auf seinen dem Druckkolben 17 zugewandten Ende weist der Arbeitskolben 16 einen Zapften 18 mit verringertem Querschnitt auf, der in eine korrespondierende Sackbohrung 19 am Druckkolben 17 greift. Auf diese Weise ist der Druckkolben 17 gegenüber dem Arbeitskolben 16 längsverschieblich geführt. Dabei ist zwischen dem Arbeitskolben 16 und dem Druckkolben 17 auf dem Zapfen 18 eine Druckfeder, nämlich ein Tellerfederpaket 20, vorgesehen, das den Arbeitskolben 16 und den Druckkolben 17 auseinander drückt.

Alternativ ist es selbstverständlich auch möglich, den Zapfen 18 dem Druckkolben 17 und die korrespondierende Sackbohrung 19 dem Arbeitskolben 16 zuzuordnen. Diese Variante ist in Fig. 4 gezeigt.

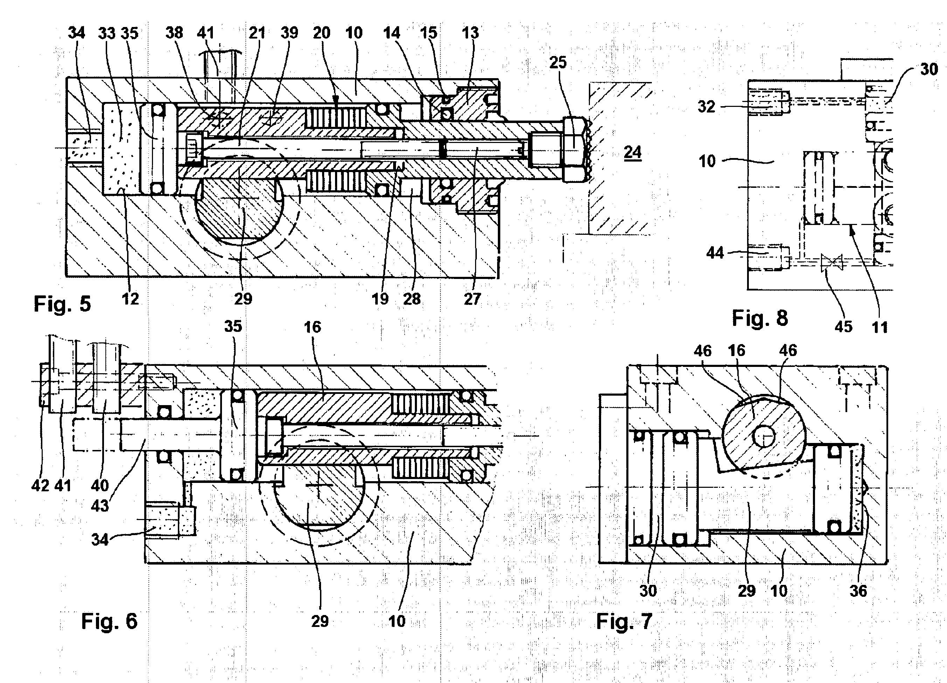

Der Arbeitskolben 16 und der Druckkolben 17 sind durch eine Schraube 21 miteinander verbunden. Konkret ist im Druckkolben 17 eine Gewindebohrung 22 vorgesehen, während der Arbeitskolben 16 eine Durchgangsbohrung 23 aufweist. Die Schraube 21 ist durch die Durchgangsbohrung 23 hindurchgeführt und in die Gewindebohrung 22 im Druckkolben 17 eingeschraubt. Beim Spannen eines Werkstücks 24 kommt über ein Druckstück 25, welches in das freie Ende des Druckkolbens 17 eingeschraubt ist, Druck auf den Druckkolben 17. Hierdurch werden der Arbeitskolben 16 und der Druckkolben 17 gegen die Kraft des Tellerfederpaketes 20 zusammengedrückt, wobei auch gleichzeitig der Druck auf den Schraubenkopf 26 verringert oder gar aufgehoben wird. Im vorliegenden Fall berührt der Schraubenkopf 26, wie in Fig. 5 und 6 erkennbar, den Arbeitskolben 16 nicht mehr. Deshalb ist die Gewindebohrung 22 im Druckkolben 17 als Gewindedurchgangsbohrung ausgebildet und von der Seite des Druckstücks 25 ein Gewindestift 27 als Konterschraube eingeschraubt.

In den Fig. 1 bis 3 ist das Spannelement beim Entspannen gezeigt. Eine zwischen der Dicht- und Führungsmutter 13 und dem Druckkolben 17 gebildete Druckkammer 28 ist mit Druckmittel beaufschlagt und drückt den Spannkolben 11 in das Gehäuse 10 zurück. Ein Klemmkolben 29, der den Arbeitskolben 16 in Spannstellung des Spannkolbens 11 klemmt (Fig. 7), gibt den Arbeitskolben 16, wie in Fig. 3 erkennbar, frei. Eine entsprechende Druckkammer 30 für den Klemmkolben 29 ist ebenfalls mit Druckmittel beaufschlagt. Die Druckkammern 28, 30 sind durch eine Druckmittelbohrung 31 miteinander verbunden (Fig. 2). Hierdurch ist nur ein gemeinsamer Druckmittelanschluß 32 für diese beiden Druckkammern 28, 30 erforderlich. Beide Druckkammern 28, 30 werden gleichzeitig mit Druckmittel beaufschlagt, wobei zuerst der Klemmkolben 29 so betätigt wird, daß er die Klemmung zwischen dem Klemmkolben 29 und dem Arbeitskolben 16 aufgehoben wird. Sodann wird der Spannkolben 11 durch das Druckmittel in das Gehäuse 10 zurückgedrückt und so das Werkstück entspannt.

Die Spannstellung des Spannelementes ist in Fig. 5 und für eine Variante, die weiter unten noch näher beschrieben wird, in den Fig. 5 und 7 gezeigt. Eine Druckkammer 33 wird über einen Druckmittelanschluß 34 mit Druckmittel beaufschlagt. Hierdurch wird der Arbeitskolben 16 und damit auch der Druckkolben 17 aus dem Gehäuse 10 heraus gegen das Werkstück 24 gedrückt. Da sich der Arbeitskolben 16 aufgrund seiner zum Klemmkolben 29 korrespondierenden Gestaltung an seiner Unterseite (Fig. 3, 7) nicht vernünftig gegenüber der Zylinderbohrung 12 dichten läßt, ist hierfür ein Betätigungskolben 35 zwischengeschaltet. Sobald der Spannkolben 11 seine Spannstellung (Fig. 5) erreicht hat, wird eine Druckkammer 36 für den Klemmkolben 29 mit Druckmittel beaufschlagt, so daß der Klemmkolben 29 in seine Klemmstellung gelangt (Fig. 7). Der Klemmkolben 29 arbeitet dabei nach dem gleichen Prinzip, wie es von dem Stützelement nach der DE 100 38 760 A1 bekannt ist. Für die Versorgung der Druckkammer 36 mit dem Druckmittel ist im gezeigten Ausführungsbeispiel ein gesonderter Druckmittelanschluß 37 vorgesehen. Die Druckkammern 33, 36 können alternativ aber auch über einen gemeinsamen Druckmittelanschluß 44 mit Druckmittel versorgt werden. in diesem Fall ist durch ein geeignetes Ventil 45 sicherzustellen, daß die Druckkammer 36 erst dann mit Druckmittel beaufschlagt wird, sobald der Spannkolben 11 seine Spannstellung sicher erreicht hat. Dieses kann durch ein Ventil 45 geschehen, das Druckmittel in die Druckmittelkammer 36 fließen läßt, sobald ein vorbestimmter Schwelldruck in der Druckkammer 33 erreicht ist. Alternativ kann auch ein elektronisch gesteuertes Ventil 45 vorgesehen sein.

Wie in den Fig. 5 und 6 gut zu erkennen ist, ist das Tellerfederpaket 20 in Spannstellung des Spannkolbens 11 zusammengedrückt. Der Druckkolben 17 ist gegenüber dem Arbeitskolben 16 in Richtung auf das Werkstück 24 vorgespannt. Sollte es nun zu Setzerscheinungen kommen, greift das Druckstück 25 aufgrund der Federspannung des Tellerfederpaktes 20 nach und das Werkstück 24 bleibt sicher eingespannt.

Das Spannelement ist weiterhin mit einer Sensorik, durch welche die Stellung des Spannkolbens 11 überwacht wird, ausgerüstet. Bei dem Ausführungsbeispiel gemäß Fig. 1 bis 5 sind zu diesem Zweck im Arbeitskolben 16 zwei in Längsrichtung des Spannkolbens 11 hintereinanderliegende Magneten 38, 39 im Arbeitskolben 16, und zwar in Abflachungen 46 am Umfang des Arbeitskolbens 16, eingelassen (Fig. 1 und 5). Wie in Fig. 3 erkennbar, sind die Magneten 38, 39 am Umfang des Arbeitskolbens 16 versetzt zueinander positioniert. Jedem Magneten 38, 39 ist ein Magnetsensor 40, 41 zugeordnet, der ein Signal sendet, sobald der zugehörige Magnet 38, 39 unter dem jeweiligen Sensor 40, 41 liegt. Im konkreten Fall spricht der Sensor 40 an, sobald sich der Arbeitskolben 16 in Spannstellung befindet, während der Sensor 41 die Stellung des Spannkolbens 16 beim Entspannen des Werkstücks 24 sensiert.

Bei der Variante nach Fig. 6, 7 sind die Sensoren 40, 41 in einem Ansatz 42 angeordnet. Der Betätigungskolben 35 verfügt über einen Dorn 43, der aus dem Gehäuse 10 herausgeführt ist. Dieser Dorn 43 besteht aus einem ferromagnetischen Material, so daß die in diesem Fall als induktive oder kapazitive Sensoren ausgebildeten Sensoren 40, 41 ein Signal senden, sobald der Dom 43 sich unter ihnen befindet. Sprechen beide Sensoren 40, 41 an, befindet sich der Arbeitskolben zuverlässig in der Stellung, bei der das Werkstück 24 entspannt ist. Spricht nur der Sensor 40 an, befindet sich der Arbeitskolben in einer Zwischenstellung. Sobald keiner der beiden Sensoren 40, 41 mehr anspricht, befindet sich der Arbeitskolben zuverlässig in seiner Spannstellung.

Das Signal der Sensoren 40, 41 kann zur sicherheitstechnischen Überwachung der Werkzeugmaschine eingesetzt werden. Gleichzeitig können die Signale auch zur Steuerung des weiter oben beschriebenen Ventils 45 bei gemeinsamem Druckmittelanschluß für die Druckkammern 33, 36 verwendet werden.

Um ein Abstimmen der Nachgreifcharakteristik des Spannelementes zu ermöglichen, ist der Raum für das Tellerfederpaket 20 zwischen dem Arbeitskolben 16 und dem Druckkolben 17 so gewählt, daß verschiedene Tellerfedern, ggf auch in unterschiedlichen Konfigurationen (Reihen- und/oder Parallelschaltung) eingesetzt werden können. Hierzu wird die Dicht- und Führungsmutter 13 abgeschraubt. Der Spannkolben 11 kann nun entfernt und die Schraube 21 gelöst werden. Arbeitskolben 16 und Druckkolben 17 sind nun getrennt und das Tellerfederpaket 20 kann ausgetauscht oder umkonfiguriert werden Ggf. können Abstimmscheiben zu weiteren Abstimmung eingesetzt werden. Im gezeigte Fall ist aber die Sachbohrung 19 für den Zapfen 18 so lang gewählt, daß das Tellerfederpaket 20 allein durch die Schraube 20 auf den gewünschten Wert vorgespannt werden kann. Wie in Figur 1 und 4 zu erkennen ist, verfügt die Sackbohrung 19 hierfür über ein ausreichendes Freimaß gegenüber dem Zapfen 18.

Wie bereits weiter oben dargelegt, wird der Arbeitskolben 16 durch den Betätigungskolben 35 beaufschlagt. Der Betätigungskolben 35 kann im Prinzip fest mit dem Arbeitskolben 16 verbunden sein. In diesem Fall ließe sich allerdings der fertig montierte Spannkolben 11 nur dann aus der Zylinderbohrung 12 herausnehmen bzw. in diese einsetzen, wenn die obere Keilfläche des Klemmkolbens 29 so tief angeordnet ist, daß der Betätigungskolben 35 am Klemmkolben 29 vorbei gelangen kann. Einfacher ist dieses, wenn, wie bei den gezeigten Ausführungsbeispielen vorgesehen, ein vom Arbeitskolben 16 gesonderter Betätigungskolben 35 vorgesehen wird. Bei einer Demontage des Spannkolbens 11 aus der Zylinderbohrung 12 bleibt der Betätigungskolben 35 in der Zylinderbohrung 12. Beim Spannen des Werkstücks 24 drückt das Hydrauliköl in der Druckkammer 33 auf den Betätigungskolben 35, der zunächst lose am Arbeitskolben 16 anliegt und die Druckkräfte aus dem Druck des Hydrauliköls in der Druckkammer 33 auf den Arbeitskolben 16 überträgt.

Der eigentliche Sinn der weiter oben beschriebenen Abflachungen 46 liegt nicht in der Aufnahme der Magneten 38, 39. Vielmehr ergibt sich aufgrund der Abflachungen 46 ein Freiraum zwischen der Wandung der Zylinderbohrung 12 und dem Arbeitskolben 16 auf der dem Klemmkolben 29 gegenüberliegenden (Ober-)seite des Arbeitskolbens 16. Hierdurch werden die Klemmkräfte aufgrund des Klemmkolbens 29 und damit die Rückhaltekräfte für den Arbeitskolben 16 verstärkt.

### Bezugszeichenliste:

- 10: Gehäuse
- 11: Spannkolben
- 12: Zylinderbohrung
- 13: Dicht- und Führungsmutter
- 14: Dichtung
- 15: Dichtung
- 16: Arbeitskolben
- 17: Druckkolben
- 18: Zapfen
- 19: Sackbohrung
- 20: Tellerfederpaket
- 21: Schraube
- 22: Gewindebohrung
- 23: Durchgangsbohrung
- 24: Werkstück
- 25: Druckstück
- 26: Schraubenkopf
- 27: Gewindestift
- 28: Druckkammer
- 29: Klemmkolben
- 30: Druckkammer
- 31: Druckmittelbohrung
- 32: Druckmittelanschluß
- 33: Druckkammer
- 34: Druckmittelanschluß
- 35: Betätigungskolben
- 36: Druckkammer
- 37: Druckmittelanschluß
- 38: Magnet
- 39: Magnet
- 40: Sensor
- 41: Sensor
- 42: Ansatz
- 43: Dorn
- 44: Druckmittelanschluß
- 45: Ventil
- 46: Abflachung

## Patentansprüche

1. Spannelement zum Spannen von Werkstücken (24) auf Maschinentischen, Vorrichtungen oder Paletten, mit einem Gehäuse (10) und einem Spannkolben (11), der in einer Zylinderbohrung (12) des Gehäuses (10) geführt ist, einer ersten Druckkammer (33) und einer zweiten Druckkammer (28), welche zum Betätigen des Spannkolbens (11) mit Druckmittel beaufschlagbar sind, sowie einer Sicherungseinrichtung, insbesondere einem Sicherungskolben (29), durch die der Spannkolben (11) in seiner das Werkstück (24) spannenden Stellung sicherbar ist, **dadurch gekennzeichnet, daß** der Spannkolben (11) einen Arbeitskolben (16) und einen in Spannstellung des Spannkolbens (11) auf das Werkstück (24) wirkenden Druckkolben (17) aufweist, wobei der Druckkolben (17) gegenüber dem Arbeitskolben (16) beweglich geführt und in Spannrichtung des Druckkolbens (17) gegenüber dem Arbeitskolben (16) vorgespannt ist, und wobei die erste Druckkammer (33) dem Arbeitskolben (16) und die zweite Druckkammer (28) dem Druckkolben (17) zugeordnet ist.

2. Spannelement nach Anspruch 1, **dadurch gekennzeichnet, daß** der Druckkolben (17) mittels einer Druckfeder, insbesondere eine Tellerfeder, vorzugsweise ein Tellerfederpaket (20), gegenüber dem Arbeitskolben (16) vorgespannt ist.

3. Spannelement nach einem der Ansprüche 1 bis 2, **dadurch gekennzeichnet, daß** die Zylinderbohrung (12) als Sackbohrung ausgeführt und mittels einer Dicht- und Führungsmutter (13), in der der Spannkolben (11) geführt ist, verschlossen ist, wobei der Gewindekerndurchmesser der Dicht- und Führungsmutter (13) größer als der Durchmesser der Zylinderbohrung (11) ist.

4. Spannelement nach einem der Ansprüche 1 bis 3, **dadurch gekennzeichnet, daß** der Spannkolben (11) bzw. sein Arbeitskolben (16) durch einen, insbesondere gesonderten, Betätigungskolben (35) beaufschlagt wird.

5. Spannelement nach einem der Ansprüche 1 bis 4, **dadurch gekennzeichnet, daß** der Druckkolben (17) und der Arbeitskolben (16) mittels einer Schraube (21) miteinander verbunden sind, wobei die Schraube (21) durch eine Sicherungsschraube oder einen Gewindestift (27) gekontert ist.

6. Spannelement nach einem der Ansprüche 1 bis 5, **dadurch gekennzeichnet, daß** der Arbeitskolben (16) in Spannstellung des Spannkolbens (11) mittels eines Sicherungskolbens (29) gesichert ist, wobei Spannkolben (11) und Sicherungskolben (29) zum Entspannen gemeinsam betätigt sind.

7. Spannelement nach einem der Ansprüche 1 bis 6, **dadurch gekennzeichnet, daß** der Arbeitskolben (16) in Spannstellung des Spannkolbens (11) mittels eines Sicherungskolbens (29) gesichert ist, wobei zum Spannen des Werkstücks (24) der Sicherungskolben (29) betätigbar ist, sobald der Spannkolben (11) in Spannstellung ist.

8. Spannelement nach Anspruch 7, **dadurch gekennzeichnet, daß** der Arbeitskolben (16) bzw. der Betätigungskolben (35) und der Sicherungskolben (29) druckmittelbetätigt sind, wobei der Sicherungskolben (29) mittels eines Ventils mit Druckmittel in Richtung auf seine Sicherungsstellung beaufschlagt wird, sobald der Spannkolben (11) in Spannstellung ist.

9. Spannelement nach einem der Ansprüche 1 bis 8, **gekennzeichnet durch** einen Sensor (40, 41) zum Überwachen der Stellung des Spannkolbens (11).

10. Spannelement nach einem der Ansprüche 1 bis 9, **dadurch gekennzeichnet, daß** der Arbeitskolben (16) auf seiner dem Sicherungskolben (29) gegenüberliegenden Seite mit Abflachungen (46) versehen ist.

## Claims

1. Clamping element for clamping work pieces (24) on machine tables, devices or pallets with a housing (10) and a clamping piston (11) that is guided in a cylinder bore (12) of the housing (10), a first pressure chamber (33) and a second pressure chamber (28), which are impinged with pressurised fluid to actuate the clamping piston (11), as well as a safety device, in particular a safety piston (29), by which the clamping piston (11) can be secured in its clamping position for the work piece (24), **characterised in that** the clamping piston (11) possesses a working piston (16) and a pressure piston (17) that in the clamping position of the clamping piston (11) acts on the work piece (24), wherein the pressure piston (17) is movably guided against the working piston (16) and is biased in the clamping direction of the pressure piston (17) against the working piston (16), and wherein the first pressure chamber (33) is attached to the working piston (16) and the second pressure chamber (28) to the pressure piston (17).

2. Clamping element according to claim 1, **characterised in that** the pressure piston (17) is biased against the working piston (16) by means of a compression spring, in particular a disc spring, preferably a set of disc springs (20).

3. Clamping element according to one of claims 1 to 2, **characterised in that** the cylinder bore (12) is designed as a blind bore, and is locked by means of a grommet and guide nut (13), in which the clamping piston (11) is guided, wherein the diameter of the thread core of the grommet and guide nut (13) is greater than the diameter of the cylinder bore (11).

4. Clamping element according to one of claims 1 to 3, **characterised in that** the clamping piston (11) or its working piston (16) is impinged by an, in particular, special actuating plunger (35).

5. Clamping element according to one of claims 1 to 4, **characterised in that** the pressure piston (17) and the working piston (16) are linked together by means of a screw (21), wherein the screw (21) is locked by a safety bolt or a set screw (27).

6. Clamping element according to one of claims 1 to 5, **characterised in that** the working piston (16) is locked in the clamping position of the clamping piston (11) by means of a safety piston (29), wherein clamping piston (11) and safety piston (29) are moved together for the release.

7. Clamping element according to one of claims 1 to 6, **characterised in that** the working piston (16) is locked in the clamping position of the clamping piston (11) by means of a safety piston (29), wherein for clamping the work piece (24), the safety piston (29) can be moved as soon as the clamping piston (11) is in the clamping position.

8. Clamping element according to claim 7, **characterised in that** the working piston (16) or the moving piston (35) and the safety piston (29) are actuated by pressurising agents, wherein the safety piston (29) is impinged with pressurising agent by means of a valve in the direction to its safety position, as soon as the clamping piston (11) is in the clamping position.

9. Clamping element according to one of claims 1 to 8, **characterised by** a sensor (40, 41) for monitoring the position of the clamping piston (11).

10. Clamping element according to one of claims 1 to 9, **characterised in that** the working piston (16) is provided with bevels (46) on its side that is opposite to the safety piston (29).

## Revendications

1. Moyen de serrage de pièces (24) sur des tables de machine-outil, sur des dispositifs ou sur des palettes, avec un carter (10) et un manchon de serrage (11) qui est guidé dans un perçage cylindrique (12) du carter (10), une première chambre de compression (33) et une deuxième chambre de compression (28) qu'on peut garnir de liquide de compression pour l'actionnement du manchon de serrage (11), ainsi qu'un dispositif de sécurité, en particulier un manchon de sécurité (29) par lequel on peut maintenir le manchon de serrage (11) en position de serrage de la pièce de travail (24), **caractérisé en ce que** le manchon de serrage (11) comprend un manchon de travail (16) et un manchon d'appui (17) qui est en contact avec la pièce de travail (24) dans la position serrée du manchon de serrage (11), le manchon d'appui (17) étant guidé en translation par rapport au manchon de travail (16) et précontraint par rapport au manchon de travail (16) dans la direction d'appui du manchon d'appui (17), et la première chambre de compression (33) étant disposée pour agir sur le manchon de travail (16) et la deuxième chambre de compression (28) étant disposée pour agir sur le manchon d'appui (17).

2. Moyen de serrage selon la revendication 1, **caractérisé en ce que** le manchon d'appui (17) est précontraint par rapport au manchon de travail (16) par un ressort, en particulier une rondelle Belleville, de préférence une pile de rondelles Belleville (20).

3. Moyen de serrage selon l'une des revendications 1 à 2, **caractérisé en ce que** le perçage cylindrique (12) est disposé en perçage borgne, et verrouillé par un écrou de guidage et d'étanchéité (13) dans lequel le manchon de serrage (11) est guidé, le diamètre de filetage de l'écrou de guidage et d'étanchéité (13) étant plus grand que le diamètre du perçage cylindrique (11).

4. Moyen de serrage selon l'une des revendications 1 à 3, **caractérisé en ce que** le manchon de serrage (11), notamment son manchon de travail (16) est actionné par un piston de poussée, en particulier un piston de poussée spécialement adapté.

5. Moyen de serrage selon l'une des revendications 1 à 4, **caractérisé en ce que** le manchon d'appui (17) et le manchon de travail (16) sont reliés entre eux par une vis (21), la vis (21) étant sécurisée par une vis de sécurité ou une tige filetée (27).

6. Moyen de serrage selon l'une des revendications 1 à 5, **caractérisé en ce que** le manchon de travail (16) est sécurisé dans la position de serrage du manchon de serrage (11) par un manchon de sécurité (29), le manchon de serrage (11) et le manchon de sécurité (29) étant actionnés ensemble pour le desserrage.

7. Moyen de serrage selon l'une des revendications 1 à 6, **caractérisé en ce que** le manchon de travail (16) est sécurisé dans la position de serrage du manchon de serrage (11) par un manchon de sécurité (29), le manchon de sécurité (29) étant actionnable pour le serrage de la pièce de travail (24) dès que le manchon de serrage (11) se trouve en position de serrage.

8. Moyen de serrage selon la revendication 7, **caractérisé en ce que** le manchon de travail (16), notamment le cylindre de poussée (35) et le manchon de sécurité (29) sont actionnés par poussée hydraulique, le manchon de sécurité (29) étant actionné grâce à une valve par poussée hydraulique en direction et jusqu'à sa position de sécurisation, dès que le manchon de serrage (11) se trouve en position de serrage.

9. Moyen de serrage selon l'une des revendications 1 à 8, **caractérisé en ce qu'**il comprend un capteur (40, 41) pour la surveillance de la position du manchon de serrage (11).

10. Moyen de serrage selon l'une des revendications 1 à 9, **caractérisé en ce que** le manchon de travail (16) comprend des plats (46) sur son côté orienté vers le manchon de sécurité (29).
